# FASCICULE DE BREVET EUROPEEN

(11) **EP 1 327 185 B1**
(45) Date de publication et mention de la délivrance du brevet: **12.12.2007**
(21) Numéro de dépôt: 01969870.3
(22) Date de dépôt: 11.09.2001
(51) Int. Cl.: G06F 21/20

(54) **PROCEDE ET APPAREIL DE PROTECTION CONTRE LA FRAUDE DANS UN RESEAU PAR CHOIX D'UNE ICONE**
VERFAHREN UND GERÄT ZUR FÄLSCHUNGSSICHERUNG IN EINEM NETZWERK BEI AUSWAHL EINES ICONS
METHOD AND APPARATUS FOR PROTECTION AGAINST FRAUD IN A NETWORK BY ICON SELECTION

(30) Priorité: 10.10.2000 FR 0012954
(43) Date de publication de la demande: 16.07.2003
(73) Titulaire: GEMPLUS, 13881 Gémenos Cedex (FR)
(72) Inventeur: NACCACHE, David, F-75009 PARIS (FR)
(74) Mandataire: Aivazian, Denis
(86) Numéro de dépôt international: PCT/FR2001/002814
(87) Numéro de publication internationale: WO 2002/031631

(56) Documents cités:
- WO-A-98/13778
- US-A- 5 664 099
- US-A- 5 821 933

## Description

L'invention concerne les réseaux qui permettent d'effectuer des transactions sécurisées entre les utilisateurs du réseau, notamment des transactions monétaires et, plus particulièrement dans le réseau INTERNET, un procédé de protection contre la fraude pour empêcher à un fraudeur de faire croire à un utilisateur que la transaction en cours est sécurisée, ceci, par exemple, en vue de soutirer à ce dernier des informations confidentielles telles qu'un numéro de carte bancaire, ou alimenter l'acheteur avec des informations inexactes.

Dans le réseau INTERNET, de plus en plus de sites marchands proposent des transactions sécurisées en mettant en oeuvre des certificats qui garantissent, dans une certaine mesure, que les informations que l'acheteur va rentrer à l'écran sur le site du vendeur ne peuvent pas être "dérobées" par un tiers à la transaction. Ceci est réalisé en établissant une communication signée et/ou chiffrée entre le vendeur et l'acheteur, par exemple à l'aide de la norme SSL.

Lorsqu'un site vendeur est sécurisé pour la transaction à effectuer, cet état est porté à la connaissance de l'acheteur, par des caractéristiques visuelles du navigateur (terme plus connu sous le vocable anglo-saxon « browser ») qui consistent en :
- l'apparition d'un cadenas fermé en bas de la fenêtre du navigateur, à gauche, à droite ou ailleurs selon le navigateur utilisé, et
- l'apparition, dans la barre d'adresse du site, de la lettre "s" après "http" pour obtenir "https" en début d'adresse.

Pour l'acheteur, ces caractéristiques visuelles sont, en général, les seules preuves que la transaction à effectuer sera sécurisée. Ainsi, un fraudeur qui voudrait "dérober" les informations confidentielles d'un acheteur potentiel ou, au contraire, l'induire en erreur en lui présentant des fausses informations, doit faire apparaître ces caractéristiques visuelles sur son site vendeur de manière à faire croire que la transaction à effectuer sera sécurisée.

Dans l'état actuel de fonctionnement des navigateurs, il est possible de faire apparaître ces caractéristiques visuelles de sécurité en l'absence de toute sécurité en utilisant un langage de programmation, notamment ceux connus sous les marques "JAVA" ou « ActiveX ».

En effet, ces langages permettent d'afficher par une "applet" une image en surimpression de celle affichée par le navigateur et ainsi faire apparaître les caractéristiques visuelles de sécurité en vue de tromper l'acheteur sur la réalité de la sécurité.

Dans la demande de brevet N° 00 11801 déposée par la Demanderesse le 15 septembre 2000, il a été décrit un procédé pour empêcher la surimpression de cette ou de ces image(s) dans certaines parties de l'écran du navigateur, notamment dans des parties réservées aux caractéristiques visuelles de sécurité.

Cette surimpression est empêchée en modifiant le programme du navigateur, du système d'exploitation ou par l'ajout d'un programme tiers afin de déterminer si l'image en surimpression affecte ces parties réservées aux caractéristiques visuelles de sécurité et afficher un message d'alarme ou prendre.des mesures protectrices si tel est le cas.

Dans le cas du langage "JAVA", la modification du programme s'effectue dans la partie de la machine virtuelle "JAVA" relative à la sécurité en ajoutant une nouvelle règle de sécurité.

Plus précisément, le procédé décrit dans la demande de brevet précitée comprend les étapes suivantes consistant à :
(a) déterminer au moins une zone de l'écran où la surimpression d'une image conduirait à afficher au visiteur du site une information erronée relative à la sécurité de la transaction en cours,
(b) détecter si une surimpression d'image qui est demandée par un site examiné recouvre tout ou partie de ladite zone,
(c) continuer la transaction si le résultat de l'étape (b) est négatif, ou
(d) entreprendre une action protectrice telle que afficher un message d'avertissement, bloquer l'exécution, refaire apparaître le contenu de la zone recouverte ailleurs etc si le résultat de l'étape (b) est positif.

Le procédé qui vient d'être décrit est basé sur le fait que la zone de l'écran où la surimpression d'une image conduirait à afficher au visiteur du site une information erronée relative à la sécurité de la transaction en cours est connue. En outre, l'image que doit contenir cette zone de l'écran est également connue de tous telle qu'un cadenas ouvert ou fermé.

Ces deux aspects ont conduit les fraudeurs à effectuer des surimpressions des images de sécurité telles que le cadenas dans des zones particulières de l'écran affectées à cet effet par le programme du navigateur.

Selon le procédé de la présente invention, il est fait en sorte que l'image ou icône de sécurité ne peut pas être connue de l'éventuel fraudeur et, en conséquence, ce dernier ne peut pas la surimprimer.

Ceci est obtenu en permettant à l'utilisateur de choisir, aléatoirement ou non, son icône de sécurité dans une base d'icônes lors de l'installation du programme du navigateur. De plus, les informations graphiques correspondant à l'icône sélectionnée sont rendues inaccessibles par les applets et programmes qui seraient téléchargés par l'utilisateur. Enfin, cette.. icône sera affichée en une couleur indiquant le statut de sécurité, par exemple "rouge" pour une transaction "non sécurisée" et "vert" pour une transaction "sécurisée".

Il est connu, par ailleurs, le brevet US-A-5-664 099 qui divulgue un appareil et un procédé pour établir un canal sécurisé entre un utilisateur et un ordinateur. Lors d'une transaction, établie suite à une requête utilisateur, l'ordinateur génère un signal qui est fonction, d'une part de données uniques et propres à l'utilisateur et d'autre part des données que l'utilisateur saisies durant la transaction. Ledit signal est alors affiché sur l'écran de l'ordinateur afin que l'utilisateur puisse savoir si les informations affichées ont été générées par un programme de confiance.

L'invention concerne donc un procédé de protection contre la fraude pour empêcher un fraudeur de faire croire à un utilisateur qu'une transaction en cours est sécurisée, des transactions étant effectuées entre les sites et les visiteurs des sites connectés par un réseau qui est -accessible par l'intermédiaire d'un programme de navigation capable d'afficher des images en surimpression sur l'écran d'affichage en provenance du site examiné, caractérisé en ce qu'il comprend les étapes suivantes consistant à :
(a) créer dans le programme d'installation du programme de navigation une base de données contenant une pluralité d'icônes,
(b) sélectionner, lors de l'exécution du programme d'installation, une icône dans ladite base de données d'icônes,
(c) enregistrer cette icône sélectionnée dans une mémoire qui est inaccessible par des moyens autres que ceux du programme de navigation,
(d) afficher cette icône sélectionnée lors de l'exécution du programme de navigation en l'affectant d'une caractéristique pour indiquer que l'opération en cours est ou n'est pas sécurisée.

La mémoire où est enregistrée l'icône est du type non volatile, telle que le disque dur de l'appareil d'accès au réseau ; elle est accessible par le programme de navigation mais rendue inaccessible par des moyens autres que ceux du programme de navigation.

Le nombre d'icônes est très élevé, par exemple un million et plus. La sélection de l'icône peut être effectuée de manière aléatoire.

Selon l'invention, la position de l'emplacement de l'icône sur l'écran peut être aussi sélectionnée parmi un certain nombre de positions ou selon une sélection aléatoire.

La caractéristique indiquant l'état de sécurité de l'opération en cours peut consister en une couleur différente selon l'état sécurisé ou non de l'opération ou un clignotement de l'icône dans le cas d'un état non sécurisé et absence de clignotement dans l'état sécurisé.

L'état sécurisé peut aussi être révélé par la présence de l'icône sélectionnée dans un emplacement déterminé, son absence - un blanc - indiquant un état non sécurisé.

L'invention concerne également un appareil d'accès à un réseau caractérisé en ce qu'il met en oeuvre le procédé tel que défini ci-dessus.

D'autres caractéristiques et avantages de la présente invention apparaîtront à la lecture de la description suivante d'un exemple particulier de réalisation, ladite description étant faite en relation avec les dessins joints dans lesquels :
- la figure 1 est une vue simplifiée d'un écran de navigateur montrant que la transaction monétaire à effectuer sera sécurisée ;
- la figure 2 est une vue simplifiée d'un écran de navigateur montrant une image en surimpression faisant croire que la transaction est sécurisée, et
- la figure 3 est une vue simplifiée d'un écran lors des opérations d'installation d'un programme de navigateur présentant des caractéristiques de la présente invention.

Dans le réseau INTERNET, pour rechercher les informations, il est fait appel à des programmes appelés "navigateurs" tels que ceux connus sous les marques "NETSCAPE" et "INTERNET EXPLORER". Ces navigateurs font apparaître des écrans comportant plusieurs parties, chaque partie étant affectée à certaines fonctionnalités.

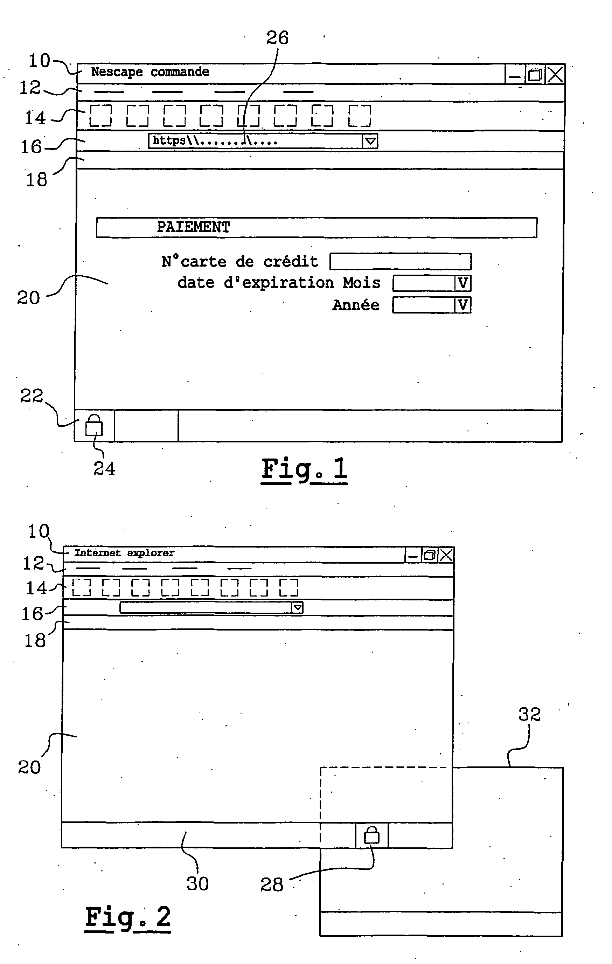

La figure 1 donne une vue simplifiée d'un tel écran dans le cas où l'utilisateur est invité à dactylographier son numéro de carte bancaire en vue de payer un achat.

Cet écran comprend sept parties ou zones horizontales qui sont :
- une barre des titres 10,
- une barre des menus 12,
- une première barre des fonctions 14,
- une deuxième barre de fonctions 16 comportant notamment une zone d'adresse 26,
- une troisième barre de fonctions 18,
- une fenêtre de navigateur 20,
- une barre de messages 22 comportant notamment une zone de cadenas 24.

S'agissant d'une transaction monétaire qui doit être sécurisée, le caractère sécuritaire est affiché comme indiqué dans le préambule, par exemple,
- par un cadenas fermé 24 dans la zone 22 de bas d'écran dans le cas du navigateur connu sous la marque NETSCAPE,
- par la lettre minuscule "s" accolée à "http" dans la zone 16 et plus particulièrement dans l'adresse 26 du site.

Ce caractère sécuritaire peut aussi être affiché à tout autre endroit de l'écran du navigateur sous la forme d'une fenêtre contenant toutes les informations de sécurité de la transaction en cours.

Dans le cas du navigateur connu sous la marque INTERNET EXPLORER (figure 2), le cadenas fermé 28 est dans la zone 30 du bas de l'écran mais à droite.

Cependant, dans le cas de la figure 2, le cadenas fermé 28 fait partie d'une image en surimpression 32 qui a pour but de faire croire que la transaction est sécurisée.

Cette image en surimpression est obtenue, par exemple, de manière classique par une "applet" en langage "JAVA", ou par tous autres langages.

Pour effectuer une telle surimpression, le fraudeur doit connaître, d'une part, l'image ou icône de sécurité - le cadenas - et, d'autre part, la zone de l'écran où cette icône doit apparaître. Il connaît ces deux éléments du programme navigateur car ils sont communs à tous les utilisateurs du navigateur.

Le procédé de l'invention consiste à faire en sorte que ces deux éléments, l'icône et, éventuellement, la zone de l'écran où elle s'affiche, ne soient pas connus et ne puissent pas être connus de l'éventuel fraudeur.

A cet effet, lors de l'installation du programme du navigateur par un utilisateur, il est prévu une étape de sélection d'une icône dite de sécurité dans laquelle l'utilisateur peut choisir une icône parmi un grand nombre d'icônes, par exemple dans une base d'un million d'icônes.

A la place de cette sélection libre, il peut être prévu une sélection aléatoire qui est réalisée par le programme d'installation.

Cet aléa du graphisme de l'icône peut être doublé d'un deuxième aléa, celui de la position de l'icône sur l'écran du navigateur.

A la suite de cette sélection, les informations graphiques de l'icône affectée à l'utilisateur sont enregistrées dans une mémoire qui est rendue inaccessible par les applets et les programmes qui seraient téléchargés. Cette mémoire est du type non volatile, telle que le disque dur de l'appareil d'accès, et est accessible par le programme de navigation mais inaccessible par des moyens autres que ceux du programme de navigation.

Par ailleurs, de manière analogue au cadenas ouvert ou fermé, cette icône de sécurité sera par exemple de couleur "rouge" pour une opération "non-sécurisée" et de couleur "vert" pour une opération "sécurisée".

Outre la couleur de l'icône pour indiquer l'état de sécurité, l'invention prévoit un clignotement de l'icône si l'état est non sécurisé, l'absence de clignotement étant interprétée comme un état sécurisé.

La caractéristique de sécurité peut consister par la présence de l'icône dans un emplacement de position déterminée pour indiquer l'état sécurisé, son absence dans l'emplacement indiquant l'état non sécurisé.

L'utilisateur du programme navigateur s'habituera avec cette nouvelle icône de sorte qu'un changement brusque en provenance d'un fraudeur attirera inévitablement.son attention, ce qui est le but recherché.

En outre, du fait que cette icône de sécurité n'est pas connue du fraudeur éventuel, il ne peut pas créer une applet qui la reproduit.

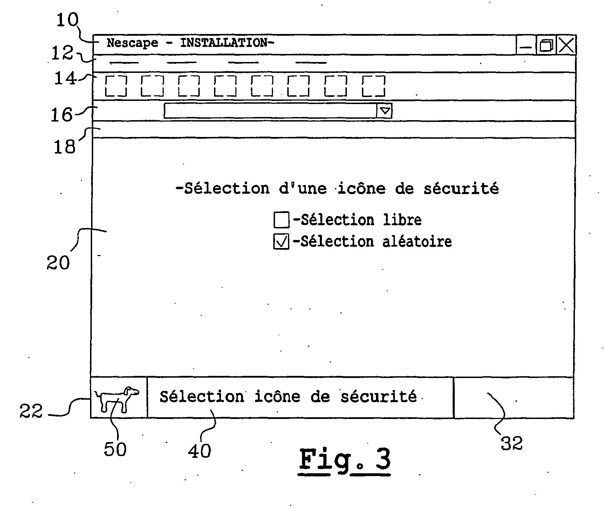

Pour réaliser cette sélection d'une icône de sécurité, le programme d'installation du navigateur fait apparaître un écran de sélection (Figure 3) dans lequel l'utilisateur choisit, par exemple, entre deux types de sélection :
□ Sélection libre,
□ Sélection aléatoire.

Dans le cas du choix de la sélection libre, l'écran suivant fait apparaître un tableau d'icônes, ou plusieurs tableaux d'icônes à la suite les uns des autres, de manière à permettre à l'utilisateur de faire son choix. Dès le choix effectué, l'icône 50 s'affiche dans la partie 22, par exemple un chien de garde.

Dans le cas du choix de la sélection aléatoire, le programme d'installation effectue aléatoirement ce choix d'une icône de sécurité dont le graphisme 50 s'affiche dans la partie 22. Si le graphisme ne plaît pas à l'utilisateur, il peut relancer cette sélection aléatoire jusqu'à l'obtention d'une icône acceptée de lui.

La description ci-dessus fait apparaître que les étapes du procédé consistent à :
(a) créer dans le programme d'installation du programme de navigation une base de données contenant une pluralité d'icônes,
(b) sélectionner, lors de l'exécution du programme d'installation, une icône dans ladite base de données d'icônes,
(c) enregistrer cette icône sélectionnée dans une mémoire qui est inaccessible par des moyens autres que ceux du programme de navigation,
(d) afficher cette icône sélectionnée lors de l'exécution du programme de navigation et l'affecter d'une caractéristique pour indiquer que l'opération en cours est ou n'est pas sécurisée.

La mémoire où est enregistrée l'icône est du type non volatile, telle que le disque dur de l'appareil d'accès au réseau ; elle est accessible par le programme de navigation mais rendue inaccessible par des moyens autres que ceux du programme de navigation.

L'invention prévoit également la sélection aléatoire ou non de la position de l'emplacement de l'icône sur l'écran parmi un certain nombre de positions. Cette sélection de la position de l'emplacement de l'icône peut être mise en oeuvre lors de l'étape (b), avant ou après la sélection de l'icône.

## Revendications

1. Procédé de protection contre la fraude pour empêcher un fraudeur de faire croire à un utilisateur qu'une transaction en cours est sécurisée, des transactions étant effectuées entre les sites et les visiteurs des sites connectés par un réseau qui est accessible par l'intermédiaire d'un programme de navigation capable d'afficher des images en surimpression sur l'écran d'affichage en provenance du site examiné, **caractérisé en ce qu'**il comprend les étapes suivantes consistant à :
(a) créer dans le programme d'installation du programme de navigation une base de données contenant une pluralité d'icônes,
(b) sélectionner, lors de l'exécution du programme d'installation, une icône dans ladite base de données d'icônes,
(c) enregistrer cette icône sélectionnée dans une mémoire qui est inaccessible par des moyens autres que ceux du programme de navigation,
(d) afficher cette icône sélectionnée lors de l'exécution du programme de navigation en l'affectant d'une caractéristique pour indiquer que l'opération en cours est ou n'est pas sécurisée.

2. Procédé selon la revendication 1, **caractérisé en ce que** le nombre des icônes de la base de données est élevé, de l'ordre du million ou plus.

3. Procédé selon la revendication 1 ou 2, **caractérisé en ce que** la sélection d'une icône est réalisée de manière aléatoire par le programme d'installation.

4. Procédé selon la revendication 1, 2 ou 3, **caractérisé en ce que** la caractéristique indiquant l'état sécurisé ou non de l'opération en cours est une couleur différente de l'icône selon l'état sécurisé ou non de l'opération.

5. Procédé selon la revendication 1, 2 ou 3, **caractérisé en ce que** la caractéristique indiquant l'état sécurisé ou non de l'opération en cours est un clignotement de l'icône dans l'état non sécurisé et l'absence de clignotement de l'icône dans l'état sécurisé.

6. Procédé selon la revendication 1, 2 ou 3, **caractérisé en ce que** la caractéristique indiquant l'état sécurisé ou non de l'opération en cours est l'absence de l'icône dans une position déterminée de l'écran dans l'état non sécurisé et la présence de l'icône dans l'état sécurisé.

7. Procédé selon l'une des revendications 1 à 6,
**caractérisé en ce que** l'étape (b) comprend, en outre, une étape de sélection aléatoire ou non d'une position d'emplacement de l'icône sur l'écran.

8. Appareil d'accès à un réseau auquel sont connectés des sites et des visiteurs des sites pour effectuer entre eux des transactions, **caractérisé en ce qu'**il met en oeuvre un procédé selon l'une des revendications précédentes 1 à 7.

9. Appareil d'accès selon la revendication 8, **caractérisé en ce que** la mémoire où est enregistrée l'icône sélectionnée est du type non volatile.

10. Appareil d'accès selon la revendication 9, **caractérisé en ce que** la mémoire de type non volatile est le disque dur de l'appareil d'accès.

## Claims

1. Fraud protection method for preventing a fraudor from causing a user to believe that a transaction in progress is secured, the transactions being carried out between sites and site visitors connected by a network which can be accessed by means of a browser program capable of displaying images from the site being examined by overlaying them on the screen, **characterised in that** it comprises the following steps consisting of:
(a) creating a database containing a plurality of icons in the installation program of the browser program,
(b) selecting an icon in said icon database when running the installation program,
(c) storing this selected icon in a memory module which cannot be accessed using any means other than those of the browser program,
(d) displaying this selected icon when running the browser program, assigning it a characteristic for indicating whether or not the current operation is secured.

2. Method according to claim 1, **characterised in that** the database contains a large number of icons, of the order of one million or more.

3. Method according to claim 1 or 2, **characterised in that** the icon is selected randomly by the installation program.

4. Method according to claim 1, 2, or 3, **characterised in that** the characteristic indicating whether or not the current operation is secured is a different colour of the icon according to whether or not the operation is secured.

5. Method according to claim 1, 2, or 3, **characterised in that** the characteristic indicating whether or not the current operation is secured consists of the icon blinking in non-secure state and not blinking in secure state.

6. Method according to claim 1, 2, or 3, **characterised in that** the characteristic indicating whether or not the current operation is secured consists of the icon not being present in a given position on the screen in non-secure state and the icon being present in the secured state.

7. Method according to any one of the claims from 1 to 6, **characterised in that** step (b) also comprises a step of randomly, or otherwise, selecting an icon location on the screen.

8. Network access device to which sites and site visitors connect to conduct transactions with each other, **characterised in that** it implements a method according to any one of the preceding claims from 1 to 7.

9. Access device according to claim 8, **characterised in that** the memory module in which the selected icon is stored is of non-volatile type.

10. Access device according to claim 9, **characterised in that** the non-volatile memory is the hard disk of the access device.

## Patentansprüche

1. Schutzverfahren gegen Betrug, um einen Betrüger daran zu hindern, einem Benutzer vorzutäuschen, dass eine laufende Transaktion gesichert ist, wobei Transaktionen zwischen den Standorten und den Besuchern der Standorte stattfinden, die über ein Netz verbunden sind, das über ein Navigationsprogramm zugänglich ist, das von dem geprüften Standort kommende Bilder auf dem Display einblenden kann, **dadurch gekennzeichnet, dass** es die folgenden Schritte umfasst:
(a) Einrichten einer eine Mehrzahl von Symbolen enthaltende Datenbank in dem Installationsprogramm des Navigationsprogramms,
(b) bei der Ausführung des Installationsprogramms ein Symbol in der genannten Symbol-Datenbank wählen,
(c) dieses gewählte Symbol in einem Speicher ablegen, der nicht von anderen Mitteln als die des Navigationsprogramms zugänglich ist,
(d) dieses gewählte Symbol bei der Ausführung des Navigationsprogramms anzeigen, indem ihm ein Merkmal hinzugefügt wird, um anzugeben, ob die laufende Operation gesichert ist oder nicht.

2. Verfahren nach Anspruch 1, **dadurch gekennzeichnet, dass** die Anzahl der Symbole der Datenbank groß ist und etwa eine Million oder mehr beträgt.

3. Verfahren nach Anspruch 1 oder 2, **dadurch gekennzeichnet, dass** die Wahl eines Symbols durch das installationsprogramm zufällig erfolgt.

4. Verfahren nach Anspruch 1, 2 oder 3, **dadurch gekennzeichnet, dass** das den gesicherten oder nicht gesicherten Zustand der laufenden Operation angebende Merkmal eine andere Farbe aufweist als das Symbol, gemäß dem gesicherten oder nicht gesicherten Zustand der Operation.

5. Verfahren nach Anspruch 1, 2 oder 3, **dadurch gekennzeichnet, dass** das den gesicherten oder nicht gesicherten Zustand der laufenden Operation angebende Merkmal ein Blinken des Symbols im nicht gesicherten Zustand und ein Nicht-Blinken des Symbols im gesicherten Zustand ist.

6. Verfahren nach Anspruch 1, 2 oder 3, **dadurch gekennzeichnet, dass** das den gesicherten oder nicht gesicherten Zustand der laufenden Operation angebende Merkmal die Abwesenheit das symbole in einer bestimmten Position des Displays in nicht gesichertem Zustand und die Anwesenheit des Symbols in gesichertem zustand ist.

7. Verfahren nach einem der Ansprüche 1 bis 6, **dadurch gekennzeichnet, dass** der Schritt (b) ferner einen Wahlschritt, zufällig oder nicht, eines Sitzes des Symbol auf dem Display umfasst.

8. Zugangsgerät zu einem Netz, an dem Standorte und Besucher der Standorte angeschlossen sind, um Transaktionen untereinander durchzuführen, **dadurch gekennzeichnet, dass** es ein Verfahren nach einem der vorangehenden Ansprüche 1 bis 7 umsetzt.

9. Zugangsgerät nach Anspruch 8, **dadurch gekennzeichnet, dass** es sich bei dem Speicher, in dem das gewählte Symbol abgelegt ist, um einen nicht flüchtigen Speicher handelt.

10. Zugangsgerät nach Anspruch 9, **dadurch gekennzeichnet, dass** der nicht flüchtige Speicher die Festplatte des Zugangsgeräts ist.
